# EUROPEAN PATENT APPLICATION

(11) **EP 1 182 546 A1**
(43) Date of publication of application: **27.02.2002**
(21) Application number: 00117723.7
(22) Date of filing: 17.08.2000
(51) Int. Cl.: G06F 9/46

(54) **Method and system for registering binary data**

(71) Applicant: SUN MICROSYSTEMS, INC., Palo Alto, California 94303 (US)
(72) Inventor: Ahrens, Kai, 24634 Padenstedt (DE); Jacobi, Sven, 25715 Eddelak (DE)
(74) Representative: HOFFMANN - EITLE

(57) **Abstract**

System and method for improved usage of resources in handling binary data. A registration server is provided receiving request data objects from application means requesting the registration of a binary data block. In case a registration data object associated with the same binary data block cannot be identified, information on the binary data block and allocated resources is registered in a list of registration data objects. The registration data object is returned to the application means instructing the application means to use resources in connection with the binary data object as indicated by the registration data object. Any further resources allocated may be released. The invention allows to efficiently use resources in connection with multiple requests for a binary data block, since resources needed for handling a binary data block are maintained only once. The invention further allows to reduce a bandwidth requirement between a client and the application means in case the client requests a binary data block multiple times.

## Description

### FIELD OF THE INVENTION

The present invention relates to a method and system for registering binary data.

### BACKGROUND OF THE INVENTION

Application programs for data processing devices are increasingly used for processing and outputting image data files or video files on a display. Similarly, application programs are used for handling audio data files, for example for recording and playback of voice data files, music data files and similar. These data types are usually handled in data files containing binary data. For example, an image is usually filed as an array of pixels, wherein for example in a color image file each pixel is described by three or four information values and it is conceivable that image or video files may contain large amounts of data to be managed. The same applies to for example audio data, wherein voice or music information is sampled at high data rates and each sample is represented by digital information.

When handling binary files or data blocks with data processing devices a memory area is usually allocated for storing the binary data block representing the image, video, audio sequence and similar.

For example, when generating a web-page for display at a browser, memory space will be allocated e.g. for images and text elements. In case in this process one graphic element such as an icon indicating a selection of options is to be displayed multiple times, memory space may be allocated for each representation of the graphic element. In case of larger graphic elements a substantial amount of memory space available may be used, resulting in poor performance.

As a solution to this problem it is conceivable to handle these identical graphic elements, or in general binary data blocks, in applications by a specific handle concept allowing to share internal data structures several times. Thus, for example a graphic elements displayed multiple times on a display will occupy memory area only once since the application program may access the same memory space several times for generating for example a bit map to be outputted on a display.

This solution generally works well since internal data structures do not have to be duplicated. However, this concept does not perform well in cases where for example graphic elements are inserted by an application sequentially, since in this case the application may not know about the existence of a memory area already storing the desired graphic element. This problem particularly occurs in case more than one application accesses the same binary data block, e.g. image file, audio file or similar, since the applications do not know of the internal data structures generated by further applications, e.g. in server-client scenario where applications are executed on a server are remotely controlled by a client. For example, a plurality of clients could access a particular server and independently start a number of applications and instructing these applications to for example display the same graphic element. In this case the applications would allocate memory area for the graphic element for each of the clients communicating with the server, possibly exceeding available memory area at the server. Even if it is known that identical descriptors of binary data blocks are used, for example URLs, memory area for the data files may not be shared.

Further, in a scenario where a client remotely controls an application on a server, and a binary data block, e.g. a graphic element needs to be transferred to the client multiple times, e.g. for building a display content at the client, large bandwidth requirements will arise. In case the client is connected to a server executing an application on behalf of the client only through a low bandwidth communication link, such as a wireless communication link or a telephone line, high latency will arise which is unacceptable.

### SUMMARY OF THE INVENTION

It is therefore desirable to provide a method and system for improved resource utilization in handling binary data blocks.

According to an example, a method of registering binary data blocks comprises receiving from an application means at a registration server a request data object associated with a binary data block, determining whether a registration data object associated with the binary data block is registered in a list of registration data objects, registering the request data object in the list of objects as the registration data object in case it is determined that the registration data object is not already registered, generating a registration handle object associated with the registration data object, and transmitting the registration handle object to the application means.

Thus, in case a registration data object associated with the same binary data block cannot be identified, information on the binary data block and allocated resources may be registered. Since the registration data object may be returned to the application means, the application means may use resources for handling the binary data object as indicated by the registration data object. Any further resources allocated may be released. The invention allows to efficiently use resources by e.g. reusing resources allocated for a binary data blocks in connection with requests concerning the same binary data block.

Further, the registration handle object may include at least one identifier of a resource allocated in connection with the binary data block, and at least one resource allocated for the binary data block in connection with the request data object may be released in case it is determined that the registration data object is already registered.

Resources may be constituted by at least one of a temporary memory area allocated in connection with the binary data block, and a process started in connection with the binary data block.

A first temporary memory area allocated for the binary data block in association with the request data object may be released in case it is determined that the registration data object is associated with a second temporary memory area for storing the binary data object and the first temporary memory area is different from the second temporary memory area.

The determining step may include calculating a data block identifier uniquely identifying the binary data block, and comparing the data block identifier with a list of data block identifiers of binary data blocks.

Further, it may be determined whether the binary data block was transmitted to a client requesting the binary data block in connection with a previous request from the client, and the binary data block may be retrieved using the registration handle object and transmitted to the client in case the binary data block was not previously transmitted to the client, and an identifier of the binary data block may be transmitted to the client in case the binary data block was previously transmitted to the client.

Still further, the registration handle object may be analyzed to obtain a client request identifier included in the registration handle object, the client request identifier identifying the request for the binary data block from the client, and the client request identifier may be compared with a list of client request identifiers stored in association with binary data blocks transmitted to the client.

The request data object further may include at least one of the group consisting of an identifier of a resource allocated in connection with the binary data block, a client request identifier of a request for the binary data block received from a client requesting the binary data block, and an identifier of the application means.

The request data object may include one of data of the binary data block, and an identifier of the first temporary memory area of the binary data block.

The registration data object may include at least one of the group consisting of the data block identifier, the identifier of at least one resource allocated in connection with the binary data block, the client request identifier, and the identifier of the application means.

The data block identifier may include at least one of the group consisting of a check sum, image size information, α channel information, color information, and data type information.

The registration handle object may include the client request identifier.

The registration handle object may include one of the group consisting of an identifier of the first temporary memory area of the binary data block, in case it is determined in the determining step that the registration data object is not registered, an identifier of the second temporary memory area of the binary data block, in case it is determined that the registration data object is registered, and data of the binary data block.

The registration server may receive request data objects from a plurality of application means.

The application means may be constituted by program means executed at the registering server.

A computer readable medium may have a program recorded thereon, where the program is to make the computer execute a method with the above steps.

A computer program product may comprise the above computer readable medium.

According to another example, a method of registering binary data blocks comprises receiving at an application means a request for a binary data block from a client, generating a request data object associated with the binary data block, transmitting the request data object to a registration server for instructing the registration server to register the request data object, receiving a registration handle object associated with a registration data object associated with the binary data block from the registration server, and serving the request using the registration handle object.

Further embodiments of the invention are described in the dependent claims.

### BRIEF DESCRIPTION OF THE DRAWINGS

- Fig. 1: shows a block diagram illustrating a system for registering binary data blocks according to an embodiment of the invention,
- Fig. 2: shows a flow diagram illustrating a flow of processing steps executed in accordance with an embodiment of the invention, particularly describing processing steps executed at the registration server,
- Fig. 3: shows a flow diagram illustrating a flow of processing steps executed in accordance with an embodiment of the invention, particularly illustrating steps for registering a request data object,
- Fig. 4: shows a flow diagram illustrating a flow of processing steps executed in accordance with an embodiment of the invention, particularly illustrating steps performed at the application means,
- Fig. 5: shows a block diagram illustrating elements of a system for registering binary data blocks in accordance with an embodiment of the invention,
- Fig. 6: shows a flow diagram illustrating a flow of processing steps executed in accordance with an embodiment of the invention, particularly illustrating steps for serving a client request,
- Fig. 7: shows a block diagram illustrating elements of a system for registering binary data blocks in accordance with an embodiment of the invention,
- Fig. 8: shows a flow diagram illustrating a flow of processing steps executed in accordance with an embodiment of the invention, particularly illustrating steps for managing temporary memory space,
- Fig. 9: shows a block diagram illustrating a system for registering binary data blocks according to an embodiment of the invention, and
- Fig. 10: shows a time sequence illustrating a flow of processing steps executed in accordance with an embodiment of the invention.

### DETAILED DESCRIPTION OF THE PREFERRED EMBODIMENTS

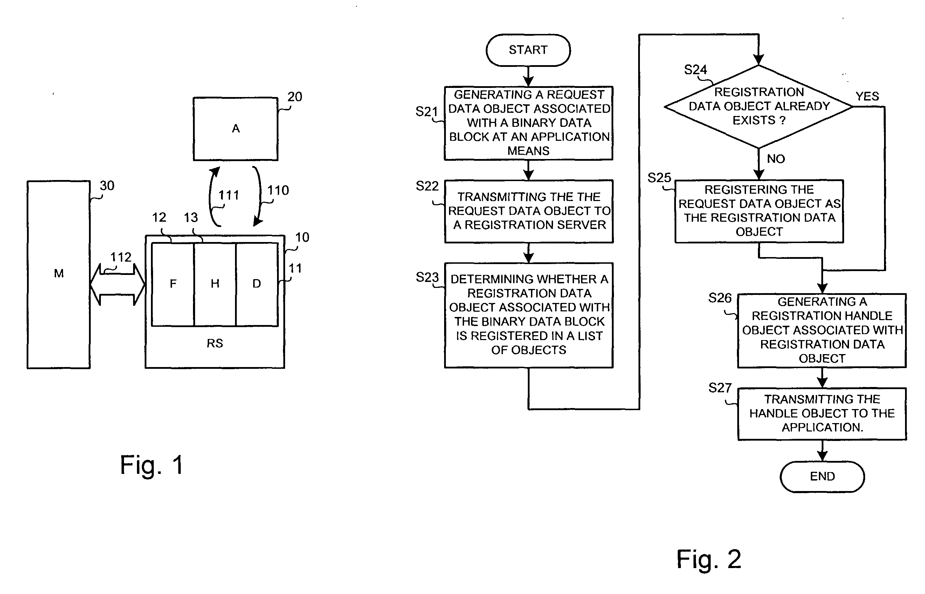

In the following an embodiment of the invention will be described with respect to Fig. 1. Fig. 1 shows a block diagram illustrating elements of a system for registering binary data blocks according to an embodiment of the invention.

Fig. 1 illustrates a registration server 10 for performing registration operations in connection with binary data blocks to be handled by the system. The registration server 10 is shown to include determining means 11 for determining whether information in connection with a requested binary data block is already registered. Further, the registration server 10 includes filing means 12 for filing information related to the binary data block in a memory 30 in case registration information in connection with a binary data block is not already registered. Still further, the registration server 10 is shown to include handle object means 13 for generating a registration handle object based on registration information stored in connection with a binary data block.

Further, Fig. 1 illustrates an application means 20 for generating a request for a binary data block, for example when executing an application.

The application means 20 and the registration server 10 communicate as indicated by arrows 110 and 111. For example, the application means 20 transmits information in connection with a request for a binary data block to the registration server 10 as illustrated by arrow 110, and the registration server 10 may transmit registration information in connection with the desired binary data block to the application means 20 as outlined by arrow 111. The registration server 10 and the memory means 30 exchange data as illustrated by an arrow 112, for example in case registration information on a binary data block is to be stored in the memory 30, or in case registration information of a particular binary data block is to be retrieved from the memory 30 by the registration server 10.

The embodiment of Fig. 1 allows to efficiently handle resources for binary data blocks, particularly in case a binary data block is requested multiple times, for example in case a graphic element or an audio element is to be inserted multiple times during execution of an application. Since each requested binary data block is registered at the registration server, in case a binary data block is requested repeatedly, a registered version of the binary data block may be used and it may thus be avoided that resources allocated in connection with the binary data block are duplicated, for example a memory area allocated for the binary data block or a process executed in connection with the binary data block.

In the following, the elements of the system for handling binary data blocks of the embodiment of Fig. 1 will be described in further detail.

The registration server 10 may be a data processing device such as a server having large capacity for serving a large number of registration requests for binary data blocks. The registration server 10 preferably has communication means in order to be able to communicate with the application means 20 and further, the registration server 10 preferably has input/output means in order to communicate with the memory 30.

The registration server 10 includes the determining means 11 which may be constituted by a code section containing instructions for performing registration operations with respect to registration requests executed at the registration server. However, it is also possible that the determining means is constituted by a data processing device communicating with the registration server 10. The determining means 11 is arranged for receiving a request data object associated with a binary data block from an application means 20 and for determining whether a registration data object associated with the binary data block is registered in a list of objects.

The determination step may be performed by comparing the request data object with each of a plurality of registration data objects, for example stored in a list of registration data objects in the memory 30. A registration data object corresponding to a request data object received from the application means 20 is found, in case both data objects refer to the same binary data block.

In case it is determined at the determining means 11 that a registration data block corresponding to the request data block, i.e. a registration data block referring to the same binary data block as the request data block is not present in the list of objects, e.g. in the memory 30, the requested data block was not registered at an earlier point in time and the determining means may instruct the filing means 12 to file the request data object as a registration data object in the list of objects in the memory 30. In case a registration data object corresponding to the request data object can be identified, i.e. associated with the same binary data block as the request data object, the binary data block was already registered at an earlier point in time, e.g. in connection with a previous request data object received from the application means 20, and no further action is required at the determining means 11 or filing means 12.

Further the registration server 10 includes the filing means 12, which may be constituted by a code section containing instructions for performing the above outlined operations or may be constituted by a separate data processing device, for example communicating with the registration server 10 and the determining means 11 via a data communication link. The filing means 12 is responsible for registering the request data object in the list of objects as the registration data object in case it is determined that a registration data object for the requested binary data block is not already registered, e.g. by inserting it into the list of objects as a registration data object. This may involve a storing operation for storing the request data object in the memory 30 by a storing operation as known in the art. Further, the filing means may include further information on the binary data block, such as identification information calculated by the determining means, information on a request for the binary data block and similar. Thus, as outlined above, the filing means 12 is responsible for registering the request data object in the list of objects as a registration data object in case it is determined by the determining means 11 that the registration data object is not already registered in the list of objects.

Still further, the registering server 10 includes the handle object means 13 which may be constituted by a code section containing instructions for generating a registration handle object associated with the registration data object and to transmit same to the applications means 20. However, it is also possible that the handle object means is constituted by a separate data processing device communicating with the other elements of the system via communication links. The handle object means 13 is responsible for generating and transmitting a registration handle object associated with the registration data object to the application means 20, e.g. upon completion of the registration operation performed by the determining means 11 and the filing means 12. The registration handle object is transmitted to the application means 20 as response to reception of a request data object at the registration server, as indicated by arrow 111. The registration data object is associated with the registration data object and thus associated with the requested binary data block.

The memory 30 may be constituted by a random access memory, by a hard disc or a database system involving a large number of storage devices, or may be constituted by any other means for storing information.

The application means 20 may be constituted by a data processing device executing an application program, for example an application program for displaying information on a display associated with the data processing device, for recording or playing back video data, audio data and similar. Further, the application means may be constituted by a code section containing instructions for executing the above operations, wherein the code section may be executed on any data processing device including the registration server 10.

Communications between the application means 20, the registration server 10 and the memory means 30 may be executed via an internal connection within a data processing device, a network connecting data processing devices, dedicated communication lines or communication links, including wireless transmissions.

In the following the request data object, the registration data object and the registration handle object will be described in further detail.

In case the operation of the system shown in Fig. 1 is controlled via a programming language, such as an object oriented programming language, the request data object, the registration data object and the registration handle object may be constituted by programmed objects being associated with the requested binary data block, e.g. by a code sequence for execution on a data processing device.

The request data object may be constituted by a message containing registration request information generated by the application means 20. The registration request information may for example include information on the binary data block, information on'the requesting entity, i.e. the application means 20, or a client (not shown) and information on the type of the requested binary data block or similar. Further, the request data object may include the binary data block itself or address information indicating a storage information of the binary data block, such as a pointer. The request data object may further be associated with processes or operations performed in connection with the requested binary data block such as processes executed at the application means and similar.

Further to the information of the request data object the registration data object may particularly include information uniquely identifying a binary data block.

The registration handle object is associated with the registration data object and therefore associated with the request data object originally transmitted from the application means 20 in connection with the request for the binary data block in case no registration entry was identified in the list of objects, since in this case the request data object was inserted into the list of objects as registration data object. However, in case a registration data object corresponding to the request data object was identified, the request data object was not inserted into the list of objects, e.g. into the memory 30, and therefore the registration handle object will be associated with a previous request data object received from, e.g., the application means 20.

Accordingly, in any case the registration handle object will be associated with the requested binary data block, however, e.g. resources in association with the requested binary data block may be different depending on the fact whether the binary data block was already registered at an earlier point in time or not.

For example, in case a graphic element constituting a binary data block is utilized several times by the application means 20, the binary data block will be registered in connection with the first request for the binary data block, i.e. the first request data object, and further requests referring to the same binary data block may then reuse resources allocated in connection with this first request. Thus, each time the application means 20 needs the binary data block again, a corresponding request data object is transmitted to the registering server and a registration handle object is returned to the application means 20 allowing the application means 20 to reuse resources allocated in connection with a previous request for the binary data block.

The embodiment of Fig. 1 allows to reduce for example storage requirements and/or processing requirements, since activities executed in connection with a binary data block, i.e. internal data structures, do not have to be duplicated in case the binary data block is requested several times by the application means 20. For example, a storage location for the requested binary data block may be allocated only once and any further storage location allocated for the binary data block may be released, i.e., the described embodiment allows to ensure that only one copy of a binary data block is maintained.

It is noted that a computer readable medium may be provided, having a program recorded thereon, where the program is to make a computer or system of data processing devices execute functions of the described embodiment, particularly of the application means and the registering server 10 including the determining means 11, the filing means 12 and the handle object means 13. A computer readable medium can be a magnetic or optical or other tangible medium on which a program is recorded, but can also be a signal, e.g., analog or digital, electromagnetic or optical, in which the program is embodied for transmission.

Further, a computer program product may be provided comprising the computer readable medium.

In the following, a further embodiment of the invention will be described with respect to Fig. 2. Fig. 2 shows a flow diagram of steps executed in accordance with a method of handling binary data blocks of an embodiment of the invention.

The processing steps illustrated by Fig. 2 may for example be executed using the system of the embodiment illustrated with respect to Fig. 1, however, the embodiment of Fig. 2 is not limited thereto.

As outlined before with respect to the embodiment of Fig. 1, the method of the embodiment of Fig. 2 also allows to improve the usage of resources, particularly when handling binary data blocks since a duplication of, e.g. data structures, for example allocated memory space, or other resources allocated or operations performed in connection with a binary data block may be avoided.

In a step S21 at the application means 20 a request data object associated with a requested binary data block is generated. The request data block may include data of the binary data block or a reference to a storage location allocated by the application means in connection with the binary data block. Further, the request data object may include information on further resources allocated in connection with the binary data block such as processes running at the application means in connection with handling the requested binary data block.

In a step S22 the request data object is transmitted to the registration server such as registration server 10 illustrated in Fig. 1. The transmission may be accomplished via an internal connection internal to a data processing device, a communication link involving a network of data processing devices, dedicated communication links including wireless transmission and similar.

In a step S23 it is determined at the registration server whether a registration data object associated with the same binary data block is already registered in a list of objects. This may be achieved by interrogating a list objects stored in a memory such as memory 30 illustrated in Fig. 1. Such a registration data object is found, in case it for example contains the binary data of the same binary data block or includes address information pointing to a memory location containing the same binary data as the requested binary data block. The determination may be achieved by comparing data sequences, descriptors or comparing identifiers obtained from the binary data block, as for example known in the art.

In a step S24 it is decided whether a registration data object being associated with the same binary data block, i.e., with the requested data block associated with the request data object, exists in the list of registration data objects.

In case the decision in step S24 is "NO", i.e., a registration data object corresponding to the request data object cannot be identified, in a step S25 the request data object is registered as the registration data object in the list of objects, for example in the memory 30 shown in Fig. 1. The registration data object therefore is associated with the requested binary data block and may contain binary data of the binary data block or may contain address information indicating a storage location of the binary data block. Further, the registration data object may contain further information on resources used for the binary data block, as specified by the request data block, such as processes executed in connection with the binary data block.

In case in step S24 the decision is "YES", i.e., in case it is decided that a registration data object corresponding to the request data object already exists in the list of objects, the request data object is not stored in the list of objects.

Thereafter, in both cases, if the decision in step S24 was "YES" or "NO", in a step S26 a registration handle object associated with the registration data object is generated. The registration handle object may essentially correspond to the registration data object, i.e. may contain similar or identical information as the registration data object.

Therefore, the registration handle object will be associated with the same resources in connection with the requested binary data block as the registration data object, e.g. will include the binary data of the binary data block, or address information of a storage location of the binary data block in a memory and/or further information on resources allocated in connection with the binary data block, such as processes running in connection with the binary data block.

Thereafter, in a step S27 the registration handle object is transmitted to the application means, as for example the application means 20 shown in Fig. 1. This allows the application means to use the resources associated with the registration data object, e.g. address information of a storage location of the binary data block and information on processes running in connection with the binary data block.

Therefore, in case the request data object was not registered as registration data object, i.e. in case a registration data object associated with the binary data block was registered beforehand at an earlier point in time, for example in connection with a previous request from the application means, resources allocated in connection with the request data object may be released, such as memory locations allocated in connection with the binary data block or processes running in connection with handling the binary data block.

Therefore, only a first request data object in connection with a binary data block will be registered in the list of objects and the corresponding resources allocated in connection with the binary data block may be also used for any following request data objects associated with the same binary data block. Therefore, a significant reduction in usage of resources, for example at the application means may be achieved, since for example memory space for storing the binary data block is maintained only once and for example processes running in connection with the binary data block are maintained only once.

Accordingly, an improved usage of resources of the system may be achieved.

It is noted that the registration server may handle request data objects from a plurality of application means, for example in case multiple application means use the registration server for registering binary data blocks. In this case information on the identity of a requesting application means may be included in the request data object. Further, in this case resources allocated in connection with a binary data block may be shared by all application means handling a particular binary data block, provided that all application means have access to the commonly used resources. Such resources could for example be commonly used databases or processing devices for executing processes in connection with a binary data block.

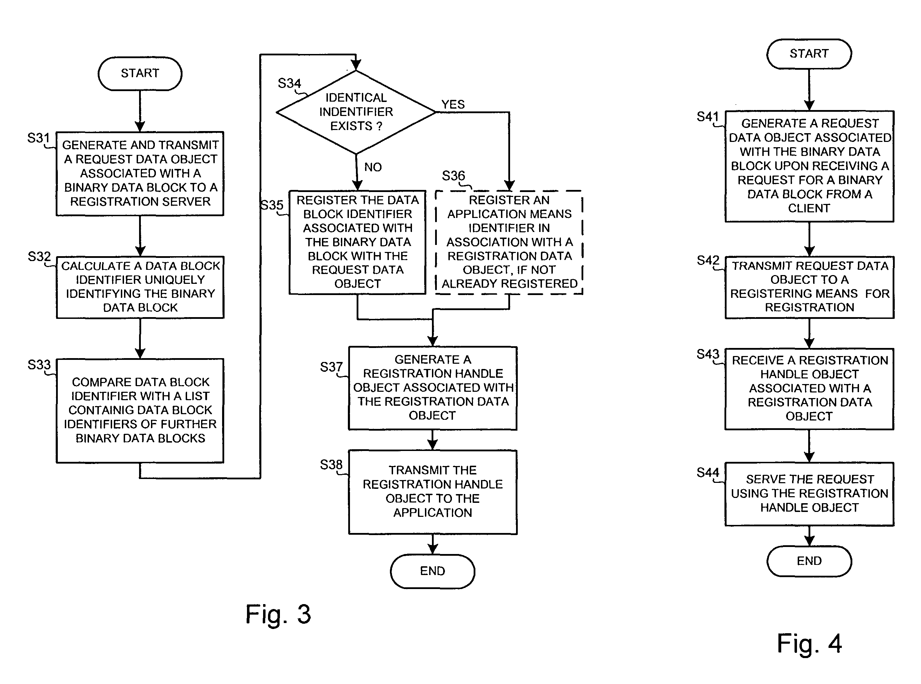

In the following a further embodiment of the invention will be described with respect to Fig. 3. Fig. 3 shows a flow diagram illustrating a flow of processing steps executed in accordance with the method according to another embodiment of the invention, with particular emphasis on steps performed at the processing server for determining whether a registration data block associated with a requested binary data block is available and for registering information in connection with a binary data block.

The processing steps may be executed using the system for handling binary data as for example outlined with respect to the embodiment of Fig. 1, however, the embodiment of Fig. 3 is not limited thereto.

In a first step S31 a request data object associated with a binary data block is generated and transmitted to a registration server, for example registration server 10 of Fig. 1. The steps of generating and transmitting the request data object may for example be as outlined with respect to Fig. 2.

In a step S32 determining means, as for example determining means 11 illustrated in Fig. 1 may calculate a data block identifier uniquely identifying the binary data block. In case the binary data of the binary data block are included in the request data object, the determining means may directly proceed to calculate the data block identifier. In case address information indicating a storage location for storing the binary data block is included in the request data object, the determining means preferably retrieves the binary data of the binary data block from the indicated storage location and then calculates the data block identifier.

The data block identifier may for example be calculated using a check sum algorithm like CRC 32 or ADLER 32, as known in the art. Further information on the binary data block may be included in obtaining the data block identifier, such as image size information as for example with an height of an image, video sequencing information as well as α-channel information indicating properties such as translucence of an image. In case an audio data block is included, corresponding information describing the audio data block may be included in the data block identifier. In brief, the data block identifier may comprise at least one of the group consisting of
a check sum,
image size information,
α-channel information,
color information, and
data type information.

Additional information on the binary data block may be included into the data block identifier as required. The main requirement is that the data block identifier uniquely identifies a specific binary data block, or at least reduces a rate of obtaining identical data block identifiers for different binary data blocks to an acceptable level. If for example a data block identifier having a word length of 16 bytes is used, the risk of obtaining identical data block identifiers for different binary data blocks is at an acceptable level for most applications.

Thereafter, in a step S33 the data block identifier calculated in connection with the requested binary data block is compared with data block identifiers stored in connection with registration data objects in the list of registration data objects, as for example stored in memory 30 shown in Fig. 1. The comparison may be performed by comparing the obtained data block identifier with each data block identifier stored in the list of registration data objects until a matching data block identifier can be found.

In a step S34 it is decided whether an identical identifier in the list of registration data objects exists.

In case the decision in step S34 is "NO", i.e., in case an identical identifier does not exist, the data block identifier associated with the requested binary data block is stored in the list, for example in connection with the request data object as a registration data object. Thus, the registration data object inserted in the list of registration data objects includes information on the data block identifier, and the request data object such as binary data of the binary data block, or address information of a storage location for storing the binary data block, and may also include information on further resources allocated in connection with the requested binary data block as outline before. Further, in case a plurality of application means are provided, the registration data block may further include information identifying a requesting application means.

In case the decision in step S34 is "YES", i.e., a data block identifier identical to the data block identifier calculated in connection with the requested binary data block can be identified, a registration procedure is not necessary. However, in case a plurality of application means is provided, in an optional step S36 identity information on the requesting application means may be registered in association with the identified registration data object. Thus, information may be maintained in the registration data object list regarding application means requesting a registration of a particular binary data block. However, this step is optional as illustrated by the dashed line at step S36 in Fig. 3.

Thereafter, in both case whether the decision in step S34 was "YES" or "NO", i.e. after step S35 or optional step S36, the flow proceeds to step S37, wherein handle object means, as for example handle object means 13 shown in Fig. 1, generated a registration handle object associated with the registration data object. The registration handle object preferably either includes binary data of the binary data block or address information of a memory area allocated in connection with the binary data block.

In case it was determined in the determining step that a registration data object in correspondence to the binary data block was not registered, the address information will specify a memory area for the binary data block as it was included in the request data object.

In case it was determined that a registration data object already existed, i.e. that the binary data block was registered at an earlier time in connection with a previous request, the address information will indicate a memory area for storing the binary data block different from the one indicated in the request data block. In this case the memory area allocated for the binary data block in connection with the request data object may be released in order to free resources.

Thereafter, in a step S38 the registration handle object is transmitted to the application means, e.g. application means 20 shown in Fig. 1, allowing the application means to use resources allocated in connection with the registration data object and to free all other resources allocated in connection with the binary data object. Thus, for example a temporary memory area for a binary data block may be maintained only once, all other temporary memory areas allocated for the binary data block by the application means may be released.

The embodiment outlined with respect to Fig. 3 allows to improve usage of resources by identifying a registration data object in connection with a binary data block intended to be reduced by application means. Only a first request data object in connection with a specific binary data block and corresponding resources will be registered in the list of registration data objects. In response to the request data object a registration handle object will be returned to the application means associated with the binary data block and thus with the corresponding resources.

Thus, resources allocated in connection the generation of further request data objects associated with the same binary data block may be released since the resources of the registration data object may be used.

In the following a further embodiment of the invention will be described with respect to Fig. 4. Fig. 4 shows a flow diagram illustrating a flow of processing steps executed in accordance with the method of an embodiment of the invention. The flow of processing steps of Fig. 4 may for example be carried out using the system shown in Fig. 1, however, Fig. 4 is not limited thereto. Fig. 4 particularly outlines processing steps executed at an application means such as the application means 20.

In a step S41 a request data object associated with a binary data block is generated at the application means. The request data object may be generated upon request from a client, such as a client data processing device controlling the execution of an application at the application means.

In a step S42 the request data object is transmitted to a registering means, as for example the registering means 10 shown in Fig. 1. At the registering means registration steps are performed as outlined with respect to previous embodiments.

Thereafter, in a step S43 the application means receives a registration handle object associated with a registration data object. The registration data object is itself associated with the binary data block and resources for handling the binary data block, such as address information of an address location for storing the binary data block, information on processes executed in connection with the binary data block and similar, as outlined before.

Thereafter, in a step S44 the request from the client concerning the binary data block may be served using the registration handle object. Serving the request may include retrieving the binary data block from the indicated storage location, using processes executed in connection with the binary data block and similar. The binary data block may be transferred to the client for local display, for playing back audio information and similar.

The embodiment outlined with respect to Fig. 4 allows to efficiently use resources, since resources allocated in connection with the binary data block, e.g. as requested by the client, are maintained only once, further resources such as further memory space allocated in connection with the binary data block may be discarded.

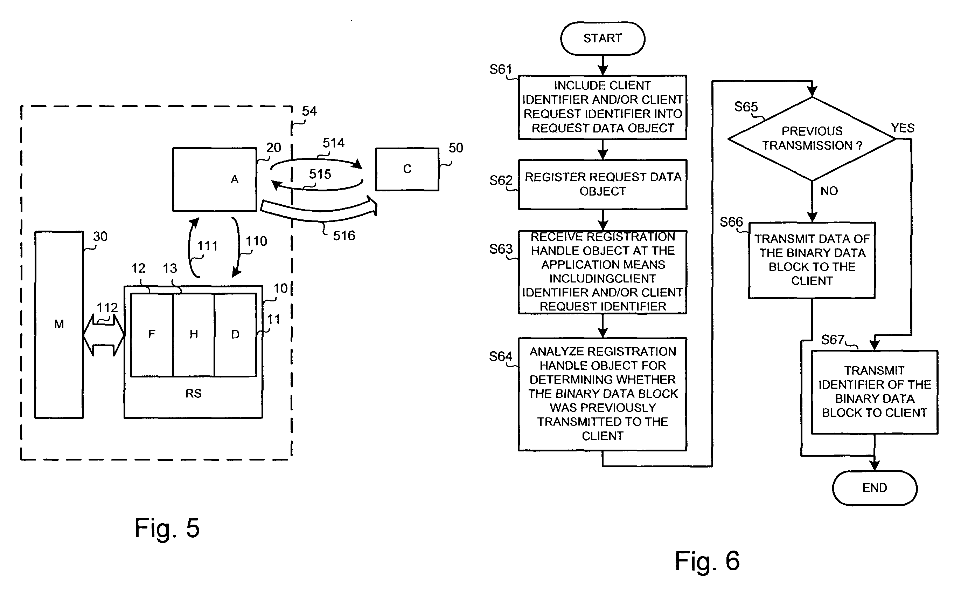

In the following a further embodiment of the invention will be described with respect to Fig. 5. Fig. 5 shows a block diagram illustrating elements of a system for handling binary data blocks according to another embodiment of the invention.

As before Fig. 1, Fig. 5 shows a registration server 10 including determining means 11, filing means 12 and handle object means 13, a memory 30 and an application means 20. Further thereto, Fig. 5 shows a client 50, such as a data processing device controlling the execution of an application at the application means 20. Arrows 514, 515 and 516 illustrate data transmissions between the client 50 and the application means 20. Further, the application means 20 includes analyzing means for analyzing the registration handle object from the registration server. A dashed line 54 includes all elements shown in Fig. 5 except the client 50 and may represent a local area network such as an intranet or any other network.

The embodiment shown in Fig. 5 particularly illustrates elements of the system for handling binary data blocks needed in connection with allocating and releasing temporary memory space, i.e. resources, for the binary data block. Further, Fig. 5 illustrates elements needed for serving a request for a binary data block from a client transmitted to the application means 20. The embodiment shown in Fig. 5 allows to re-use resources such as temporary memory space and further allows to reduce a bandwidth requirement needed between the client 50 and the application means 20 in connection with multiple requests from the client concerning the same binary data block, such as a graphic element for local display at the client 50.

The client 50 may be a general purpose data processing device such as a home computer operated by a user who wishes to e.g., remotely execute an application at the application means. The client may also be constituted by a mobile device such as a mobile computer, a mobile phone or a mobile data organizer having means for connecting to the application means, e.g. through wireless communication links. The client communicates with the application means 20 as indicated by the arrows 514, 515 and 516, e.g. via a network, dedicated communication links including wireless transmissions and similar. The client preferably includes means for generating a request for a binary data block including a client request identifier, and means for receiving an identifier of the binary data block and for using a local copy of the requested binary data block.

Most importantly, further to the information described with respect to previous embodiments, the request data object of the shown embodiment includes an identifier of a client request used by the client for requesting a binary data block. The client request identifier allows to determine whether the binary data block was transmitted to the client at an earlier point in time. The client request identifier included in the request data object may be an interface generated at the application means upon receiving a request for a binary data block from the client 50. The interface may be a handle object including information on the client and on the identity of a particular request received from the client, e.g. a sequential number.

The registration server 10 determines whether a registration data object corresponding to the request data object is registered in the list of registration data objects, as outlined before. Further, the registration server registers the request data object as outlined before, including the client request identifier. Therefore, the registration handle object transmitted from the registration server 10 to the application means 20, as indicated by arrow 111, in addition to information outlined with respect to previous embodiments also includes the client request identifier.

The application means 20, by analyzing the registration handle object received from the registration server, may thus determine whether client 50 requested the binary data block at an earlier point in time. In case the client request identifier of the request data object and the client request identifier of the registration handle object are identical, the client requested the binary data for the first time and in this case, as indicated by an arrow 516, the binary data of the binary data block may be transmitted from the application means 20 to the client 50.

In case the client request identifier of the request data object and the client request identifier of the registration handle object are different, the client requested the binary data block already at an earlier point in time in connection with a previous request and thus a local copy of the binary data block is available at the client. In this case the application means 20, as indicated by an arrow 514, may only transmit an identifier of the binary data block to the client 50, allowing the client 50 to access the local copy of the binary data block.

Accordingly, the invention may allow that data of a binary data block such as a graphic element for local display at the client is transmitted to the client only once, and for any further request of the binary data block a local copy of the binary data block at the client is used, resulting in a substantial saving of bandwidth.

In the following a further embodiment of the invention will be described with respect to Fig. 6. Fig. 6 shows a flow diagram illustrating a flow of processing steps executed in the method according to another embodiment of the invention. The embodiment of Fig. 6 particularly illustrates steps for serving a request from a client, e.g. using the system shown in Fig. 5. However, Fig. 6 is not limited thereto.

As outlined with respect to Fig. 5 the embodiment of Fig. 6 allows to reduce a bandwidth requirement for a communication link between an application means such as application means 20 of Fig. 5 and a client such as client 50 shown in Fig. 5. In case a binary data block is requested multiple times from the client, only in connection with the first request the binary data block is actually transmitted to the client 50 from the application means, for all further requests concerning the binary data block only an indicator is transmitted to the client indicating that the client received the binary data block at an earlier point in time and allowing the client to access a memory location allocated in connection with the binary data block as received with the first request. This allows a substantial saving of bandwidth in communications between the application means 20 and the client 50.

In a first step S61 client information and an interface containing information on the identity of a particular request concerning a binary data block, for example client identity information and information on the request, such as a sequential number, is included into the request data object transmitted to the registering server, such as registering server 10 shown in Fig. 5. In brief, the request data object may include at least one of the group consisting of
an identifier of a resource allocated in connection with the binary data block,
a client request identifier of a request for the binary data block received from a client requesting the binary data block, and
an identifier of the application means.

Further, the request data object may include one of
data of the binary data block, and
an identifier of the first temporary memory area of the binary data block.

In a step S62 the registering server 10 performs the registering steps as outlined with respect to previous embodiments. In particular, in case a corresponding registration data object cannot be identified, the request data object including the client information and request information is registered as registration data object. The registration data object may include at least one of the group consisting of
the data block identifier,
the identifier of at least one resource allocated in connection with the binary data block,
the client request identifier, and
the identifier of the application means.

Thereafter, in a step S63 a registration handle object is received at the application means. The registration handle object includes information on the registration data object, i.e. information on the binary data block and allocated resources such as memory space and similar. Further, the registration handle object may include the client request identifier.

In a step S64 the registration handle object is analyzed for determining whether the binary data block was previously transmitted to the client in connection with a previous request. This may be achieved by comparing the client identity information and the information on the request, such as a sequential number, of the interface contained in the registration handle object with the client identity and the identifier of the client request of the interface of the request data object.

In case the interfaces match, the requested binary data block was not previously transmitted to the client. In case the interfaces are different, i.e. in case the request identifiers are different, it is indicated that the binary data block was transmitted to the client at an earlier time in connection with a previous request for the binary data block.

In case in step S65 it is determined that the binary data block was not previously transmitted to the client, i.e. in case the decision is "NO" in step S65, in a step S66 the binary data block is transmitted to the client. In case in step S65 the decision is "YES", i.e. the binary data block was previously transmitted to the client, in step S67 an identifier of the binary data block is transmitted to the client, instructing the client to use a local copy of the binary data block.

The embodiment outlined with respect to Fig. 6 allows to substantially reduce bandwidth requirements since a binary data block is transmitted to a client only once and for each subsequent request concerning the binary data block only an identifier is transmitted to the client instructing the client to use a local copy of the binary data block.

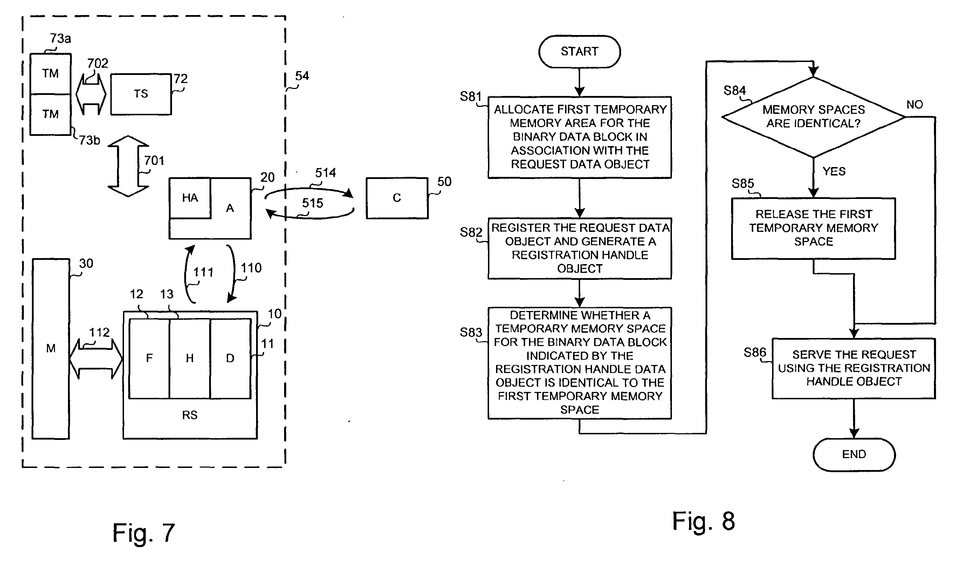

In the following a further embodiment of the invention will be described with respect to Fig. 7. Fig. 7 shows a block diagram illustrating elements of a system according to another embodiment of the invention. Fig. 7, further to Fig. 5, shows elements for temporary storage of a binary data block.

Fig. 7 shows temporary storing means 72 allocating temporary memory spaces 73a and 73b. An arrow 701 illustrates a data exchange between the temporary storing means 72 and the application means 20 and/or the registering server 10. An arrow 702 illustrates an exchange of data between the temporary storing means 72 and the temporary memories 73a and 73b.

A dashed line 54 includes all elements shown in Fig. 5 except the client 50 and may represent a local area network such as an intranet or any other network.

The temporary storing means 72 is responsible for allocating temporary memory area for the binary data block and for releasing temporary memory space as indicated by arrow 702 in Fig. 7. Temporary memory area for a binary data block is allocated by temporary storing means 72 for example upon receiving a request for the binary data block at the application means 20 from the client 50, as indicated by an arrow 515. Temporary memory area for the binary data block may also be generated upon generating a request data object or upon receiving the request data object at the registering server 10. The temporary memory area may for example be temporary memory area 73a indicated in Fig. 7. The temporary memory area may be a random access memory, a permanent memory or may be any other type of memory available.

Address information of the temporary memory area allocated for the binary data object, in the present example temporary memory area 73a, may be included into the request data object transmitted to the registration server 10.

After the registration process a registration handle object will be returned from the registration server to the application means 20, as indicated by arrow 111 and as outlined with respect to previous embodiments.

In case the binary data block was requested for the first time, the registration handle object will include address information of the same temporary memory area as the request data object, in the present case temporary memory area 73a, since in this case the request data object was registered as registration data object and returned to the application means 20.

However, in case the binary data block was not requested for the first time, the request data object including the address information on temporary memory area 73a was not registered and instead a registration handle object containing address information of a further temporary memory area, for example temporary memory area 73b shown in Fig. 7, will be returned to the application means 20. The temporary memory area returned with the registration handle object, in the example temporary memory area 73b, is the temporary memory area registered for the binary data block and may be used in connection with serving the request for the binary data block. Accordingly, the temporary memory area 73a allocated in connection with the request for the binary data block may be released.

The embodiment of Fig. 7 thus allows to efficiently use resources such as temporary memory means in serving requests for binary data blocks.

In the following a further embodiment of the invention will be described with respect to Fig. 8. Fig. 8 shows a flow diagram of a sequence of processing steps according to a method of an embodiment of the invention. Fig. 8 particularly illustrated steps for allocating and releasing temporary memory space. The steps of Fig. 8 may be performed by the system shown in Fig. 7, however, Fig. 8 is not limited thereto. The embodiment of Fig. 8, similar to the embodiment of Fig. 7, allows to efficiently use memory space in connection with serving multiple requests for a binary data block.

In a step S81 a first temporary memory area for the binary data block is allocated in association with a request for a binary data block or in association with generating a request data object, as outlined with respect to previous embodiments.

In a step S82 the request data object is registered at the registering means and a registration handle object is generated, as outlined with respect to previous embodiments.

In a step S83 it is determined whether a temporary memory area for the binary data block indicated by the registration handle object is identical to the first temporary memory space, e.g. by comparing address information, such as pointers or similar.

In a step S84 it is determined whether the memory spaces are identical. In case the decision in step S84 is "YES", in a step S85 the first temporary memory space is released. In case in step S84 the decision is "NO", the temporary memory space is not released.

Thereafter, i.e. in case the decision in step S84 was "NO" and after step S85 in a step S86 the request is served using the registration handle object. Serving the request may include transmitting the binary data block or an identifier of the binary data block to the client 50 or similar.

Even though the embodiment of Fig. 8 was described with respect to the usage of temporary memory area, basically any other resource allocated in connection with the binary data block may be handled correspondingly. Such a further resource may for example be a process executed in connection with a binary data object at application means or similar.

The embodiment described with respect to Fig. 8 allows to efficiently use a memory space by re-using temporary memory space or any other resource allocated for a binary data block in connection with a first request for the binary data block for further requests concerning the binary data block.

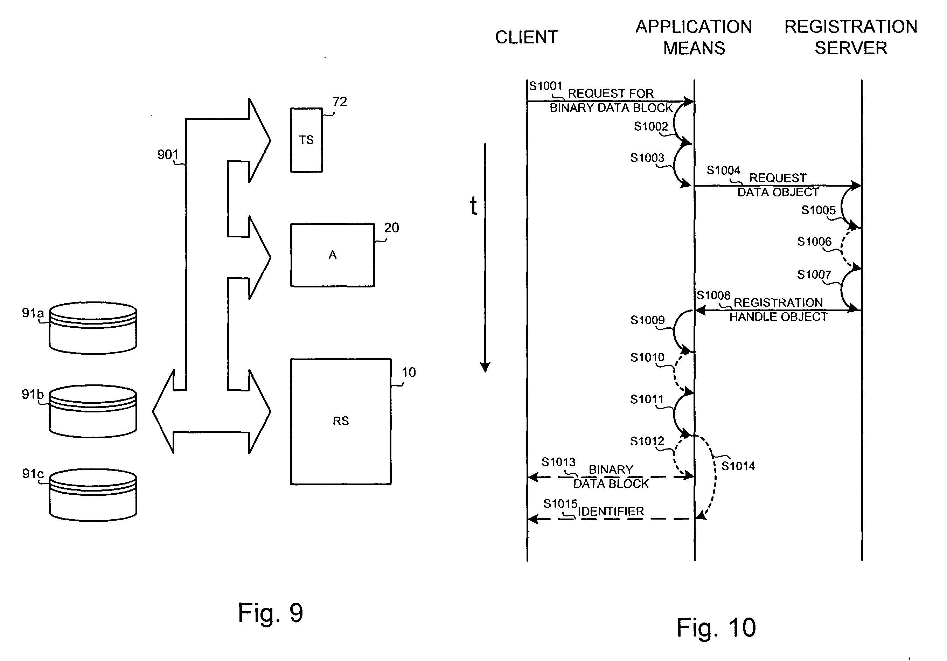

In the following, a further embodiment of the invention will be described with respect to Fig. 9. Fig. 9 shows a block diagram of elements of the system for handling binary data blocks according to another embodiment of the invention. Fig. 9 particularly illustrates an embodiment of the invention having distributed elements connected e.g. through a network.

Fig. 9 shows the registration server 10, the application means 20 and the temporary storing means 72 as well as three exemplary memory devices 91a, 91b and 91c. The elements shown in Fig. 9 are interconnected by communication links 901, for example a data transmission network. Messages between the individual elements shown in Fig. 9 such as request data objects, registration handle objects and memory accesses may be executed via the communication link 901. Accordingly, the elements of the system for handling binary data blocks may be located at arbitrary locations, provided access to the communication link 901. For example, the elements shown in Fig. 9 could be located in a local area network or could be connected via a wide area network such as the internet.

The memory devices 91a, 91b and 91c may be data base devices or any other memories.

Further, even though only one application means 20 and one temporary storing means 72 is shown, an arbitrary number of application means and/or temporary storing means may be provided. Further, an arbitrary number of clients may be provided, and may for example be connected to the communication link 901 or may be connected to the application means 20 via any other communication link, including wireless transmissions.

It is noted that a computer readable medium may be provided having a program recorded thereon, where the program is to make a computer or a system of data processing devices execute functions of the elements shown in Fig. 9, particularly of the registration server 10 and/or the application means 20 and/or the temporary storing means 72. A computer readable medium can be a magnetic or optical or other tangible medium on which a program is recorded, but can also be a signal, e.g., analog or digital, electromagnetic or optical, in which the program is embodied for transmission.

Further, a computer program product may be provided comprising the computer readable medium.

In the following a further embodiment of the invention will be described with respect to Fig. 10. Fig. 10 shows a time sequence of steps executed at elements of the system according to an embodiment of the invention and messages transmitted between the elements according to the embodiment of the invention.

Fig. 10 illustrates events occurring at and between a client, application means and a registration server.

The embodiment of Fig. 10 allows to efficiently use resources in connection with multiple requests concerning a binary data block and allows to reduce bandwidth requirements in connection with multiple requests for a binary data block.

In a first step S1001 a request for a binary data block is transmitted from the client to the application means.

At the application means in a step S1002 a first temporary memory area is allocated for the binary data block in association with the request for the binary data block.

Thereafter, in a step S1003 a request data object is generated at the application means, as for example outlined with respect to previous embodiments. The request data object may include data of the binary data block or an identifier of the first temporary memory area of the binary data block. Further, the request data block may include further information on resources allocated in connection with the requested binary data block.

In a step S1004 the request data object is transmitted from the application means to the registration server. In a step S1005 at the registration server it is determined whether a registration data object associated with the binary data block is already registered in a list of registration data objects. This may be accomplished by calculating a data block identifier as outlined with respect to previous embodiments.

In a step S1006, in case it is determined that a registration data object is not already registered, the request data object is registered in the list of objects as the registration data object. Since this is an optional step, step S1006 is indicated by a dashed line.

Thereafter, in a step S1007 a registration handle object associated with the registration data object is generated. The registration handle object is therefore also associated with the binary data block and resources allocated for the binary data block registered in connection with the registration data objects.

In a step S1008 the registration handle object is transmitted from the registration server to the application means.

In a step S1009 at the application means the registration handle object is analyzed for determining whether the temporary memory area associated with the binary data block is identical to the temporary memory area associated with the temporary memory area allocated in step S1002.

In case the temporary memory areas are identical, the first temporary memory area, i.e. the temporary memory area allocated in step S1002 is released in a step S1010. Step S1010 is indicated by a dashed line, since this step is optional.

Thereafter, in a step S1011 the registration handle object may be analyzed for determining whether the binary data block was transmitted to the client in connection with serving a previous request from the client. The determination may be performed as outlined with respect to previous embodiments, including analyzing the registration handle object in view of a identifier identifying a request from a client.

In case it is determined in step S1011 that the binary data block was not previously transmitted to the client, in a step S1012 the binary data block is retrieved using the registration handle object, i.e. the address information contained in the registration handle object or the binary data contained in the registration handle object and in a step S1013 the binary data block is transmitted to the client.

In case it is decided in step S1011 that the data block was previously transmitted to the client, in a step S1014 an identifier is generated for instructing the client to re-use a local copy of the binary data block available at the client, and in a step S1015 the identifier is transmitted to the client. Since steps S1012-S1015 are optional, they are illustrated by dashed lines.

According to another embodiment of the invention, a registration server may have the following structural elements:
1) Registration server for registering binary data blocks, comprising
   a code section containing instructions for receiving a request data object associated with a binary data block from an application means 20 and for determining whether a registration data object associated with the binary data block is registered in a list of objects,
   a code section containing instructions for registering the request data object in the list of objects as the registration data object in case it is determined that the registration data object is not registered, and
   a code section containing instructions for generating and transmitting a registration handle object associated with the registration data object to the application means 20.
2) Registration server according to 1), including
   a code section containing instructions for releasing at least one resource allocated for the binary data block in connection with the request data object in case it is determined that the registration data object is already registered, and
   wherein the registration handle object includes at least one identifier of resources allocated in connection with the binary data block.
3) Registration server according to 1), wherein the resources are constituted by at least one of
   a temporary memory area 73a, 73b allocated in connection with the binary data block, and
   a process started in connection with the binary data block.
4) Registration server according to 1), comprising
   a code section containing instructions for allocating in temporary memory means a first temporary memory area for the binary data block in connection with the request data object, and for releasing the first temporary memory area allocated for the binary data block in case is determined that the registration data object is associated with a second temporary memory area holding the binary data object different from the first temporary memory area.
5) Registration server according to 1), comprising
   a code section containing instructions for calculating data block identifier uniquely identifying the binary data block, and
   a code section containing instructions for comparing the data block identifier with a list of data block identifiers binary data blocks.
6) Registration server according to 1), comprising a code section containing instructions for determining whether the binary data block associated with the registration handle object was previously transmitted to a client 50 requesting the binary data block, retrieving the binary data block using the registration handle object and transmitting the binary data block to the client 50, in case the binary data block was not previously transmitted to the client 50, and transmitting an identifier of the binary data block to the client 50 in case the binary data block was previously transmitted to the client 50.
7) Registration server according to 1), including
   a code section containing instructions for analyzing the registration handle object to obtain a client request identifier included in the registration handle object, the client request identifier identifying the request for the binary data block form the client 50, and
   a code section containing instructions for comparing the client request identifier with a list of client request identifiers stored in association with binary data blocks transmitted to the client 50.
8) Registration server according to 1), wherein the request data object further includes at least one of the group consisting of
   an identifier of a resource allocated in connection with the binary data block,
   a client request identifier of a request for the binary data block received from a client requesting the binary data block, and
   an identifier of the application means 20.
9) Registration server according to 1), wherein the request data object includes one of
   data of the binary data block, and
   an identifier of the first temporary memory area of the binary data block.
10) Registration server according to 1), wherein the registration data object includes at least one of the group consisting of
   the data block identifier,
   the identifier of at least one resource allocated in connection with the binary data block,
   the client request identifier, and
   the identifier of the application means 20.
11) Registration server according to 1), wherein the data block identifier comprises at least one of the group consisting of
   a check sum,
   image size information,
   α channel information,
   color information, and
   data type information.
12) Registration server according to 1), wherein the registration handle object comprises the client request identifier.
13) Registration server according to 1), wherein the registration handle object comprises one of the group consisting of
   an identifier of the first temporary memory area of the binary data block, in case it is determined in the determining step that the registration data object is not registered,
   an identifier of the second temporary memory area of the binary data block, in case it is determined that the registration data object is registered, and
   data of the binary data block.
14) Registration server according to 1), arranged for receiving request data objects from a plurality of application means
15) Registration server according to 1), wherein the application means 20 is constituted by program means executed at the registering server

According to another embodiment of the invention, an application means may have the following structural elements:
16) Application means for cooperating with the registration server according to 1) - 15), comprising
   a code section containing instructions for receiving a request for a binary data block from a client and generating a request data object associated with the binary data block, and
   a code section containing instructions for transmitting the request data object to the registration server 10 for registering the data object and for receiving a registration handle object associated with a registration data object associated with the binary data block from the registration server 10.
17) Application means according to 16), including
   a code section containing instructions for releasing at least one resource allocated for the binary data block in connection with the request data object in case it is determined that the registration data object is already registered, and
   wherein the registration handle object includes at least one identifier of resources allocated in connection with the binary data block.
18) Application means according to 16), wherein the resources are constituted by at least one of
   a temporary memory area 73a, 73b allocated in connection with the binary data block, and
   a process started in connection with the binary data block.
19) Application means according to 16), including
   a code section containing instructions for allocating a first temporary memory area for the binary data block in association with the request data object and for releasing the first temporary memory area in case the second temporary memory area is different from the first temporary memory area
   a code section containing instructions for analyzing the registration handle object for determining a second temporary memory area allocated for the binary data block in association with the registration data object, and
20) Application means according to 16), including
   a code section containing instructions for generating an application handle object for the binary data block upon receiving the request from the client, the application handle object being associated with the first temporary memory area, and
   a code section containing instructions for comparing address information of the second temporary memory area included in the registration handle object with the address information of the first temporary memory area in order to determine whether the first temporary memory area is different from the second temporary memory area.
21) Application means according to 16), including a code section containing instructions for determining whether the binary data block was transmitted to the client in connection with a previous request from the client, retrieving the binary data block using the registration handle object and transmitting the binary data block to the client in case the binary data block was not previously transmitted to the client and transmitting an identifier of the binary data block to the client in case the binary data block was previously transmitted to the client
22) Application means according to 16), wherein the client serving means includes
   a code section containing instructions for analyzing the registration handle object to obtain a client request identifier included in the registration handle object, the client request identifier identifying the request for the binary data block form the client 50, and
   a code section containing instructions for comparing the client request identifier with a list of client request identifiers stored in association with binary data blocks transmitted to the client 50.
23) Application means according to 16), wherein the request data object further includes at least one of the group consisting of
   an identifier of a resource allocated in connection with the binary data block,
   a client request identifier of a request for the binary data block received from a client requesting the binary data block, and
   an identifier of the application means 20.
24) Application means according to 16), wherein the request data object includes one of
   data of the binary data block, and
   an identifier of the first temporary memory area of the binary data block.
25) Application means according to 16), wherein the registration data object includes at least one of the group consisting of
   the data block identifier,
   the identifier of at least one resource allocated in connection with the binary data block,
   the client request identifier, and
   the identifier of the application means 20.
26) Application means according to 16), wherein the data block identifier comprises at least one of the group consisting of
   a check sum,
   image size information,
   α channel information,
   color information, and
   data type information.
27) Application means according to 16), wherein the registration handle object comprises the client request identifier.
28) Application means according to 16), wherein the registration handle object comprises one of the group consisting of
   an identifier of the first temporary memory area of the binary data block, in case it is determined in the determining step that the registration data object is not registered,
   an identifier of the second temporary memory area of the binary data block, in case it is determined that the registration data object is registered, and
   data of the binary data block.
29) Application means according to 16), arranged for receiving requests for binary data blocks from a plurality of clients.
30) Application means according to 16), wherein the application means is constituted by program means executed at the registering server

According to another embodiment of the invention, a system for registering binary data blocks may have the following structural elements:
31) System for registering binary data blocks, comprising a registration server 10 and an application means 20, wherein
   the registration server 10 includes
      a code section containing instructions for for receiving a request data object associated with a binary data block from an application means 20 and for determining whether a registration data object associated with the binary data block is registered in a list of objects,
      a code section containing instructions for for registering the request data object in the list of objects as the registration data object in case it is determined that the registration data object is not registered,
      a code section containing instructions for for generating and transmitting a registration handle object associated with the registration data object to the application means 20,
   the application means 20 includes
      a code section containing instructions for for receiving a request for a binary data block from a client and generating a request data object associated with the binary data block, and
      a code section containing instructions for for transmitting the request data object to the registration server 10 for registering the data object and for receiving a registration handle object associated with a registration data object associated with the binary data block from the registration server 10.

According to another embodiment of the invention, a system for registering binary data blocks may have the following structural elements:
32) Client for cooperating with the system according to claim 57, comprising
   a code section containing instructions for for generating a request for a binary data block, and
   a code section containing instructions for for receiving an identifier of the binary data block for using a local copy of the requested binary data block.

## Claims

1. Method of registering binary data blocks, comprising
receiving from an application means (20) at a registration server (10) a request data object associated with a binary data block,
determining whether a registration data object associated with the binary data block is registered in a list of registration data objects,
registering the request data object in the list of objects as the registration data object in case it is determined that the registration data object is not already registered,
generating a registration handle object associated with the registration data object, and
transmitting the registration handle object to the application means (20).

2. Method of claim 1, wherein
the registration handle object includes at least one identifier of a resource allocated in connection with the binary data block, and
at least one resource allocated for the binary data block in connection with the request data object is released in case it is determined that the registration data object is already registered.

3. Method of claim 1 or 2, wherein the resources are constituted by at least one of
a temporary memory area (73a, 73b) allocated in connection with the binary data block, and
a process started in connection with the binary data block.

4. Method of one of the preceding claims, wherein a first temporary memory area allocated for the binary data block in association with the request data object is released in case it is determined that the registration data object is associated with a second temporary memory area for storing the binary data object and the first temporary memory area is different from the second temporary memory area.

5. Method of one of the preceding claims, wherein the determining step includes
calculating a data block identifier uniquely identifying the binary data block, and
comparing the data block identifier with a list of data block identifiers of binary data blocks.

6. Method of one of the preceding claims, including
determining, whether the binary data block was transmitted to a client (50) requesting the binary data block in connection with a previous request from the client (50),
retrieving the binary data block using the registration handle object and transmitting the binary data block to the client (50) in case the binary data block was not previously transmitted to the client (50), and
transmitting an identifier of the binary data block to the client (50) in case the binary data block was previously transmitted to the client (50).

7. Method of claim 6, including
analyzing the registration handle object to obtain a client request identifier included in the registration handle object, the client request identifier identifying the request for the binary data block form the client (50), and
comparing the client request identifier with a list of client request identifiers stored in association with binary data blocks transmitted to the client (50).

8. Method for registering binary data blocks, comprising
receiving at an application means (20) a request for a binary data block from a client (50),
generating a request data object associated with the binary data block,
transmitting the request data object to a registration server (10) for instructing the registration server (10) to register the request data object,
receiving a registration handle object associated with a registration data object associated with the binary data block from the registration server (10), and
serving the request using the registration handle object.

9. Method of claim 8, wherein
the registration handle object includes at least one identifier of a resource allocated in connection with the binary data block, and
at least one resource allocated for the binary data block in connection with the request data object is released in case it is determined that the registration data object is already registered.

10. Method of claim 8 or 9, wherein the resources are constituted by at least one of
a temporary memory area (73a, 73b) allocated in connection with the binary data block, and
a process started in connection with the binary data block.

11. Method of one of the claims 8 - 10, including
allocating a first temporary memory area for the binary data block in association with the request data object,
analyzing the registration handle object for determining a second temporary memory area allocated for the binary data block in association with the registration data object, and
releasing the first temporary memory area in case the second temporary memory area is different from the first temporary memory area.

12. Method of one of the claims 8 - 11, wherein
an application handle object for the binary data block is generated upon receiving the request from the client (50), the application handle object being associated with the first temporary memory area, and
address information of the second temporary memory area included in the registration handle object is compared with the address information of the first temporary memory area in order to determine whether the first temporary memory area is different from the second temporary memory area.

13. Method of one of the claims 8 - 12, wherein
it is determined at the registration server (10) whether a registration data object associated with the binary data block is registered in a list of objects, and
the request data object is registered in the list of objects as the registration data object in case it is determined that the registration data object is not already registered.

14. Method of one of the claims 8 - 13, including
calculating a data block identifier at the binary check means uniquely identifying the data block, and
comparing the data block identifier with a list of data block identifiers of binary data blocks.

15. Method of one of the claims 8 - 14, including
determining, whether the binary data block was transmitted to the client (50) in connection with a previous request from the client (50),
retrieving the binary data block using the registration handle object and transmitting the binary data block to the client (50) in case the binary data block was not previously transmitted to the client (50), and
transmitting an identifier of the binary data block to the client (50) in case the binary data block was previously transmitted to the client (50).

16. Method of one of the claims 8 - 15, including
analyzing the registration handle object to obtain a client request identifier included in the registration handle object, the client request identifier identifying the request for the binary data block form the client (50), and
comparing the client request identifier with a list of client request identifiers stored in association with binary data blocks transmitted to the client (50).

17. Method of one of claims 1 - 16, wherein the request data object includes at least one of the group consisting of
an identifier of a resource allocated in connection with the binary data block,
a client request identifier of a request for the binary data block received from a client (50) requesting the binary data block, and
an identifier of the application means (20).

18. Method of one of claims 1 - 17, wherein the request data object includes one of
data of the binary data block, and
an identifier of the first temporary memory area of the binary data block.

19. Method of one of claims 1 - 18, wherein the registration data object includes at least one of the group consisting of
the data block identifier,
the identifier of at least one resource allocated in connection with the binary data block,
the client request identifier, and
the identifier of the application means (20).

20. Method of one of claims 1 - 19, wherein the data block identifier comprises at least one of the group consisting of
a check sum,
image size information,
α channel information,
color information, and
data type information.

21. Method of one of claims 1 - 20, wherein the registration handle object comprises the client request identifier.

22. Method of one of claims 1 - 21, wherein the registration handle object comprises one of the group consisting of
an identifier of the first temporary memory area of the binary data block, in case it is determined in the determining step that the registration data object is not registered,
an identifier of the second temporary memory area of the binary data block, in case it is determined that the registration data object is registered, and
data of the binary data block.

23. Method of one of claims 1 - 22, wherein the registration server (10) receives request data objects from a plurality of application means.

24. Method of one of claims 1 - 23, wherein the application means (20) is constituted by program means executed at the registering server.

25. A computer readable medium, having a program recorded thereon, where the program is to make the computer execute the method according to one of the claims 1 - 24.

26. A computer program product comprising the computer readable medium according to claim 25.

27. Registration server for registering binary data blocks, comprising
determining means (11) for receiving a request data object associated with a binary data block from an application means (20) and for determining whether a registration data object associated with the binary data block is registered in a list of objects,
filing means (12) for registering the request data object in the list of objects as the registration data object in case it is determined that the registration data object is not registered, and
handle object means (13) for generating and transmitting a registration handle object associated with the registration data object to the application means (20).

28. Registration server of claim 27, including
means for releasing at least one resource allocated for the binary data block in connection with the request data object in case it is determined that the registration data object is already registered, and
wherein the registration handle object includes at least one identifier of resources allocated in connection with the binary data block.

29. Registration server of claim 27 or 28, wherein the resources are constituted by at least one of
a temporary memory area (73a, 73b) allocated in connection with the binary data block, and
a process started in connection with the binary data block.

30. Registration server of one of the claims 27 - 29, comprising
temporary storing means for allocating in temporary memory means a first temporary memory area for the binary data block in connection with the request data object, and
wherein the temporary storing means is arranged to release the first temporary memory area allocated for the binary data block in case is determined that the registration data object is associated with a second temporary memory area holding the binary data object different from the first temporary memory area.

31. Registration server of one of the claims 27 - 30, comprising
calculation means for calculating data block identifier uniquely identifying the binary data block, and
comparing means for comparing the data block identifier with a list of data block identifiers binary data blocks.

32. Registration server of one of the claims 27 - 31, comprising transmission means for determining whether the binary data block associated with the registration handle object was previously transmitted to a client (50) requesting the binary data block, retrieving the binary data block using the registration handle object and transmitting the binary data block to the client (50), in case the binary data block was not previously transmitted to the client (50), and transmitting an identifier of the binary data block to the client (50) in case the binary data block was previously transmitted to the client (50).

33. Registration server of one of the claims 27 - 32, including
means for analyzing the registration handle object to obtain a client request identifier included in the registration handle object, the client request identifier identifying the request for the binary data block form the client (50), and
means for comparing the client request identifier with a list of client request identifiers stored in association with binary data blocks transmitted to the client (50).

34. Registration server of one of the claims 27 - 33, wherein the request data object includes at least one of the group consisting of
an identifier of a resource allocated in connection with the binary data block,
a client request identifier of a request for the binary data block received from a client requesting the binary data block, and
an identifier of the application means (20).

35. Registration server of one of the claims 27 - 34, wherein the request data object includes one of
data of the binary data block, and
an identifier of the first temporary memory area of the binary data block.

36. Registration server of one of the claims 27 - 35, wherein the registration data object includes at least one of the group consisting of
the data block identifier,
the identifier of at least one resource allocated in connection with the binary data block,
the client request identifier, and
the identifier of the application means (20).

37. Registration server of one of the claims 27 - 36, wherein the data block identifier comprises at least one of the group consisting of
a check sum,
image size information,
α channel information,
color information, and
data type information.

38. Registration server of one of the claims 27 - 37, wherein the registration handle object comprises the client request identifier.

39. Registration server of one of the claims 27 - 38, wherein the registration handle object comprises one of the group consisting of
an identifier of the first temporary memory area of the binary data block, in case it is determined in the determining step that the registration data object is not registered,
an identifier of the second temporary memory area of the binary data block, in case it is determined that the registration data object is registered, and
data of the binary data block.

40. Registration server of one of the claims 27 - 39, arranged for receiving request data objects from a plurality of application means

41. Registration server of one of the claims 27 - 40, wherein the application means (20) is constituted by program means executed at the registering server

42. Application means for cooperating with the registration server of one of the claims 27 - 40, comprising
request data object means for receiving a request for a binary data block from a client and generating a request data object associated with the binary data block, and
communication means for transmitting the request data object to the registration server (10) for registering the data object and for receiving a registration handle object associated with a registration data object associated with the binary data block from the registration server (10).

43. Application means of claim 42, including
means for releasing at least one resource allocated for the binary data block in connection with the request data object in case it is determined that the registration data object is already registered, and
wherein the registration handle object includes at least one identifier of resources allocated in connection with the binary data block.

44. Application means of claim 42 or 43, wherein the resources are constituted by at least one of
a temporary memory area (73a, 73b) allocated in connection with the binary data block, and
a process started in connection with the binary data block.

45. Application means of one of the claims 42 - 44, including
temporary storing means for allocating a first temporary memory area for the binary data block in association with the request data object
analyzing means for analyzing the registration handle object for determining a second temporary memory area allocated for the binary data block in association with the registration data object, and
wherein the temporary storing means is arranged to release the first temporary memory area in case the second temporary memory area is different from the first temporary memory area.

46. Application means of one of the claims 42 - 45, including
means for generating an application handle object for the binary data block upon receiving the request from the client, the application handle object being associated with the first temporary memory area, and
means for comparing address information of the second temporary memory area included in the registration handle object with the address information of the first temporary memory area in order to determine whether the first temporary memory area is different from the second temporary memory area.

47. Application means of one of the claims 42 - 46, including client serving means for determining, whether the binary data block was transmitted to the client in connection with a previous request from the client, retrieving the binary data block using the registration handle object and transmitting the binary data block to the client in case the binary data block was not previously transmitted to the client and transmitting an identifier of the binary data block to the client in case the binary data block was previously transmitted to the client

48. Application means of one of the claims 42 - 47, wherein the client serving means is arranged to
analyze the registration handle object to obtain a client request identifier included in the registration handle object, the client request identifier identifying the request for the binary data block form the client (50), and
compare the client request identifier with a list of client request identifiers stored in association with binary data blocks transmitted to the client (50).

49. Application means of one of the claims 42 - 48, wherein the request data object includes at least one of the group consisting of
an identifier of a resource allocated in connection with the binary data block,
a client request identifier of a request for the binary data block received from a client requesting the binary data block, and
an identifier of the application means (20).

50. Application means of one of the claims 42 - 49, wherein the request data object includes one of
data of the binary data block, and
an identifier of the first temporary memory area of the binary data block.

51. Application means of one of the claims 42 - 50, wherein the registration data object includes at least one of the group consisting of
the data block identifier,
the identifier of at least one resource allocated in connection with the binary data block,
the client request identifier, and
the identifier of the application means (20).

52. Application means of one of the claims 42 - 51, wherein the data block identifier comprises at least one of the group consisting of
a check sum,
image size information,
α channel information,
color information, and
data type information.

53. Application means of one of the claims 42 - 52, wherein the registration handle object comprises the client request identifier.

54. Application means of one of the claims 42 - 53, wherein the registration handle object comprises one of the group consisting of
an identifier of the first temporary memory area of the binary data block, in case it is determined in the determining step that the registration data object is not registered,
an identifier of the second temporary memory area of the binary data block, in case it is determined that the registration data object is registered, and
data of the binary data block.

55. Application means of one of the claims 42 - 54, arranged for receiving requests for binary data blocks from a plurality of clients.

56. Application means of one of the claims 42 - 55, wherein the application means is constituted by program means executed at the registering server

57. System for registering binary data blocks, comprising a registration server (10) and an application means (20), wherein
the registration server (10) includes
determining means for receiving a request data object associated with a binary data block from an application means (20) and for determining whether a registration data object associated with the binary data block is registered in a list of objects,
filing means for registering the request data object in the list of objects as the registration data object in case it is determined that the registration data object is not registered,
handle object means for generating and transmitting a registration handle object associated with the registration data object to the application means (20),
the application means (20) includes
request data object means for receiving a request for a binary data block from a client and generating a request data object associated with the binary data block, and
communication means for transmitting the request data object to the registration server (10) for registering the data object and for receiving a registration handle object associated with a registration data object associated with the binary data block from the registration server (10).

58. Client for cooperating with the system according to claim 57, comprising
means for generating a request for a binary data block, and
means for receiving an identifier of the binary data block for using a local copy of the requested binary data block.
